# FASCICULE DE BREVET EUROPEEN

(11) **EP 2 499 712 B1**
(45) Date de publication et mention de la délivrance du brevet: **22.06.2016**
(21) Numéro de dépôt: 10795424.0
(22) Date de dépôt: 08.11.2010
(51) Int. Cl.: H02G 3/22, H02G 3/32, F16L 3/16, F16L 3/24

(54) **SUPPORT POUR MAINTENIR EN POSITION DES OBJETS ALLONGÉS PAR RAPPORT À UNE STRUCTURE**
HALTER ZUM POSITIONSFESTEN HALTEN LÄNGLICHER OBJEKTE RELATIV ZU EINER STRUKTUR
MOUNTING FOR HOLDING ELONGATE OBJECTS IN POSITION RELATIVE TO A STRUCTURE

(30) Priorité: 09.11.2009 FR 0957903
(43) Date de publication de la demande: 19.09.2012
(73) Titulaire: Airbus Operations (S.A.S.), 31060 Toulouse (FR)
(72) Inventeur: PIUZZI, Olivier, F-31170 Tournefeuille (FR); PEYSSI, Gérard, F-31840 Aussonne (FR); ROUYRE, François, F-31700 Cornebarrieu (FR)
(74) Mandataire: Gicquel, Olivier Yves Gérard
(86) Numéro de dépôt international: PCT/FR2010/052398
(87) Numéro de publication internationale: WO 2011/055100

(56) Documents cités:
- EP-A1- 0 700 139
- EP-A2- 2 037 552
- WO-A2-2006/007326
- DE-A1-102005 039 652
- DE-C1- 10 010 933
- FR-A- 1 578 347

## Description

La présente invention concerne un support pour maintenir en position des objets allongés, tels que tubes, gaines, câbles, étc... par rapport à une structure telle qu'une traverse ou une poutre, ledit support comprenant au moins une pièce de support pour maintenir lesdits objets allongés orientés suivant une direction choisie par l'intermédiaire de moyens de maintien et de moyens d'attache tels qu'un collier de serrage.

Le document DE 102005039652 décrit un support selon le préambule de la revendication 1.

A bord des aéronefs, les faisceaux de câbles électriques sont généralement tenus par des éléments de maintien, par exemple des colliers de serrage sur des supports, eux-mêmes fixés sur des éléments structuraux, tels que des cadres de fuselage ou des traverses de plancher. Ces supports, qui sont généralement des tôles en alliage léger, sont rivés ou vissés sur la structure de l'avion. Souvent ces supports ne peuvent pas s'adapter à toutes structures.

De plus, les supports et les colliers actuellement utilisés ne sont pas assez éloignés pour éviter auxdits câbles de frotter contre les poutres ou cadres. De tels contacts par frottement, en particulier en environnement vibratoire, peuvent conduire à une usure des gaines de ces câbles électriques, et entraîner des perturbations dans le fonctionnement des circuits électriques reliés auxdits câbles, telles que des pertes de signaux ou des courts-circuits.

Lorsque la position des faisceaux dans l'espace doit être parfaitement maîtrisée, il est également connu d'utiliser des supports rigides qui suivent la trajectoire voulue et qui sont fixés à la structure en plusieurs points. De tels supports sont plus lourds et plus difficiles à installer.

La présente invention propose un nouveau support pour maintenir en position un câble ou un faisceau de câbles électriques ou tout autre objet allongé, résolvant au moins partiellement au moins un des problèmes ci-dessus.

Notamment, le support pour maintenir au moins un objet allongé selon l'invention est plus simple dans son mode opératoire tout en assurant un meilleur maintien des objets allongés.

Il est ainsi proposé une nouvelle forme de supports qui ne nécessite plus l'utilisation des moyens de fixation conventionnels, mais intégrant directement une fonction de serrage à la structure pour un montage plus simple et plus fiable.

Un autre objectif de l'invention est de proposer un support présentant une plus grande modularité en termes de zone de fixation sur la structure et de forme de la structure par rapport aux supports existants.

A cet effet, l'invention concerne un support pour le maintien en position d'un objet allongé tel qu'un câble électrique par rapport à une structure, selon la revendication 1.

Selon une forme de réalisation de l'invention, les surfaces d'appui de la structure sont sensiblement planes, au moins une ouverture étant aménagée dans la structure pour faire passer ledit objet allongé.

Les pièces de liaison sont configurées de sorte à venir serrer au moins partiellement le pourtour de l'ouverture.

A titre d'exemple, chacune des deux pièces se présente sous la forme d'un demi-berceau qui vient serrer au moins partiellement le pourtour de l'ouverture, les deux demi-berceaux assemblés définissant un orifice à travers lequel est reçu l'objet allongé. De cette façon, le support étant constitué de deux demi-berceaux qui viennent définir l'orifice à travers lequel passent par exemple les câbles électrique, on élimine pratiquement le risque de frottement par contact de ces câbles contre le bord de la structure.

Selon une forme de réalisation de l'invention, l'une des deux pièces de liaison comprend au moins une saillie et l'autre pièce comprend au moins un creux correspondant, lesdites saillies et lesdits creux correspondants coopérant ensemble pour bloquer lesdites deux pièces contre les surfaces d'appui de la structure.

De cette façon, la fonction de serrage est directement intégrée au support par l'intermédiaire de ces deux pièces de liaison, permettant ainsi d'éviter l'utilisation des moyens de fixation conventionnels. L'étape de montage des ces pièces sur la structure est rendue plus simple que les supports de fixation connus.

Selon une forme alternative, les deux pièces de liaison comprennent des trous permettant le passage des moyens de serrage tels que des colliers de serrage pour bloquer lesdites deux pièces contre les surfaces d'appui de la structure.

Avantageusement, dans leur face d'appui, les deux pièces peuvent comporter des moyens de verrouillage pour bloquer en position les pièces sur la structure afin de conférer une meilleure fixation du support sur la structure dans un environnement vibratoire.

Ladite pièce de support en forme de rampe présente une extrémité solidaire d'au moins l'une des deux pièces de liaison.

Pour éliminer totalement le risque de frottement entre les câbles et la pièce de support, l'objet allongé peut être maintenu à une distance par rapport à la surface supérieure de la rampe ainsi que le bord de l'orifice afin d'éviter les frottements qui pourraient entraîner une usure de l'objet allongé.

De préférence, lesdits moyens de maintien forment une surface sensiblement fermée telle qu'un collier de serrage ou frette destinés à venir entourer le contour externe des objets allongés.

Selon une autre forme de réalisation de l'invention, les deux pièces de liaison se présentent sous la forme d'une paire de flasques, lesdits flasques comportant un bord ayant une forme sensiblement incurvée et un bord prolongé par une extension. Des trous sont prévus sur les extrémités des flasques et l'extension pour recevoir un moyen de serrage pour assembler les deux flasques l'un à l'autre contre la structure.

Selon une forme de réalisation, les moyens de maintien se présentent sous la forme d'un module à clipper comportant une premier patte de fixation configurée de manière à venir se clipper sur ladite rampe et au moins une seconde patte de fixation destinée à fixer l'objet allongé par l'intermédiaire de moyens de fixation. Ainsi, on comprend bien qu'il est très facile de monter ou de démonter le module par rapport à la rampe.

A titre d'exemple, ladite première patte de fixation comporte une surface ouverte concave apte à venir se clipper sur la rampe.

De préférence, pour une meilleure fixation du module sur la rampe, des trous sont prévus dans ladite première extrémité et les flasques pour permettre le passage d'un moyen d'attache tel qu'un collier de serrage.

Selon une forme particulièrement avantageuse de réalisation de l'invention, ladite seconde patte de fixation forme une liaison rotule pour orienter l'objet allongé dans la direction choisie.

De préférence cette liaison rotule est constituée par une pièce sensiblement circulaire pourvue en son centre d'une saillie ayant une surface de contact sphérique, ladite surface coopérant avec une surface concave sphérique correspondante d'un élément mobile de fixation. Des trous sont prévus sur la périphérie de ladite pièce et l'élément mobile de fixation pour faire passer un moyen d'attache pour fixer l'élément mobile sur la surface sphérique une fois que la direction suivant laquelle l'objet allongé doit être maintenu est choisie.

Selon une autre forme de réalisation de l'invention, ladite seconde patte de fixation forme une pièce de fixation comprenant au moins un trou pour recevoir les moyens de fixation.

Selon une autre forme de réalisation de l'invention, le support comporte un ensemble de deux pièces de support intermédiaires destiné à être interposé entre deux pièces de fixation appartenant à deux supports distincts, les deux pièces intermédiaires étant montées coulissantes l'une par rapport à l'autre pour ajuster la longueur dudit ensemble.

De préférence, l'ensemble comporte une rampe femelle ayant une forme sensiblement cylindrique, l'objet allongé étant maintenu en position sur ladite rampe par des moyens de fixation.

Selon une forme particulière de la structure dans laquelle au moins une desdites surfaces d'appui de la structure forme deux surfaces d'appui en équerre, le flasque destiné à venir en appui contre lesdites surfaces d'appui en équerre comporte deux faces d'appui reliées entre elles par un bras de liaison, ledit bras étant agencé de sorte que lesdites deux faces d'appui sont en appui respectivement contre les deux surfaces d'appui en équerre. L'invention sera décrite plus en détail en référence aux dessins annexés dans lesquels:
- la figure 1 représente schématiquement selon une vue éclatée un support pour maintenir en position des éléments allongés, selon un premier mode de réalisation de l'invention la rampe dudit support n'ayant pas été représentée pour mieux visualiser les moyens de serrage mis en oeuvre ;
- les figures 2A, 2B représentent schématiquement une autre forme de réalisation des moyens de serrage mis en oeuvre dans le support selon le premier mode de réalisation, la rampe étant là aussi non représentée ;
- la figure 3 représente schématiquement selon une vue de face, une pièce de support ;
- les figures 4A et 4B montrent schématiquement une forme des moyens de blocage pour bloquer les deux pièces de liaison sur la structure ;
- les figures 5A et 5B montrent une autre forme de réalisation de ces moyens de blocage;
- les figures 6A et 6B montrent deux vues d'un support selon un deuxième mode de réalisation ;
- la figure 6C montre une vue en coupe transversale d'une partie de la figure 6A ;
- la figure 7 montre schématiquement l'installation d'un objet allongé sur un support de la figure 6A fixé sur une structure ;
- les figures 8A, 8B, 8C et 8D montrent les différentes vues d'une première forme de réalisation d'un module à clipper;
- les figures 9A, 9B, 9C et 9D montrent les différentes vues d'une forme alternative d'un module à clipper ;
- la figure 10 montre une vue en coupe de section d'une forme particulière du support apte à être fixé sur une structure ayant une forme de section en L ;
- la figure 11 montre une vue en coupe de section d'une forme alternative du support apte à être fixé sur une structure ayant une forme de section en T ;
- la figure 12 montre une vue de profil du support de fixation de la figure 11 ;
- la figure 13 montre schématiquement une installation particulière de deux supports selon le deuxième mode de réalisation dans une ouverture de la structure, les deux supports étant reliés entre eux par une pièce de support intermédiaire ;
- les figures 14A et 14B montrent plus en détail une extrémité de la pièce de support intermédiaire fixée sur le module à clipper, et la figure 14C montre une vue de section selon une coupe AA et A'A' de la figure 14A ;
- la figure 15 montre les deux possibilités de montage de supports selon le deuxième mode de réalisation dans une ouverture de la structure telle qu'une traverse et entre deux traverses.

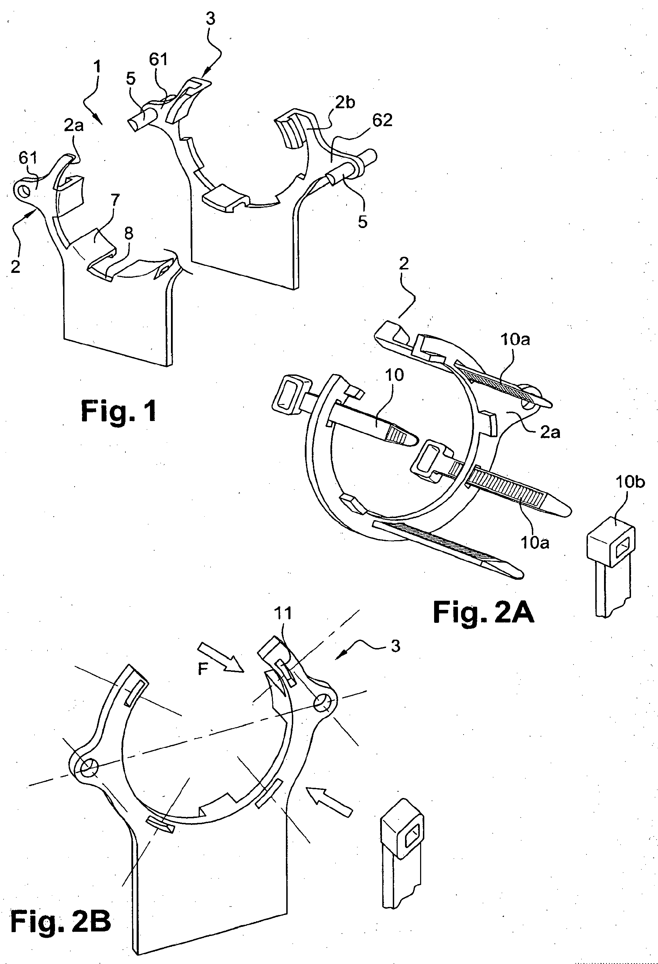

Le support 1 pour maintenir en position un objet allongé par rapport à une structure, conforme au premier mode de réalisation de l'invention est montré sur les figures 1, 2A et 2B.

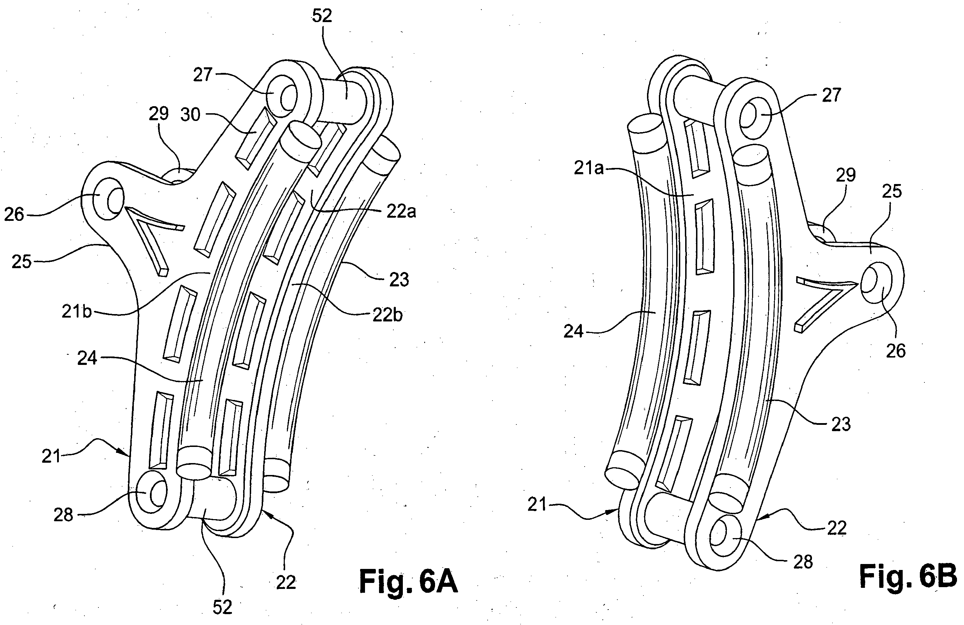

Plus particulièrement, les figures 1, 2A et 2B montrent des moyens de serrage particulièrement adaptés aux supports selon l'invention. Pour une meilleure visibilité desdits moyens de serrage, les rampes associées aux supports de l'invention n'ont pas été représentées sur ces figures. Cependant, les rampes telles que décrites à l'aide des autres figures, et notamment des figures 6A et 6B sont aisément transposables au support des figures 1, 2A et 2B. De même, les moyens de serrage décrits en association avec le support des figures 1 à 5B sont aisément transposables au support des figures 6A et 6B.

Le support selon l'invention est particulièrement adapté pour maintenir en position des objets allongés tels que des tubes, gaines, câbles, etc... La structure, qui est par exemple un cadre de fuselage ou une traverse de plancher est délimitée par deux surfaces sensiblement planes et au moins sensiblement parallèles. Une ouverture est généralement réalisée dans l'épaisseur de cette structure pour faire passer les câbles.

Le support 1 comporte deux pièces de liaison 2, 3 disposées de part et d'autre de la structure. Les deux pièces de liaison 2, 3 se présentent chacune sous forme de flasques en demi-berceau. Chacune desdites pièces 2, 3 comporte une face d'appui 2a, 3a qui viennent en appui contre une surface d'appui correspondante de la structure, en serrant ainsi au moins partiellement le pourtour de l'ouverture. Les deux pièces assemblées définissent ainsi un orifice à travers lequel passent les câbles.

Pour assurer la fonction de serrage entre les deux pièces de liaison 2, 3, le pourtour desdites deux pièces 2, 3 est muni de saillies 7 et de creux 8 correspondants qui coopèrent ensembles pour les bloquer contre les surfaces d'appui de la structure.

Chacune des deux pièces 2, 3 comporte deux pattes de fixation 61, 62, disposées de manière diamétralement opposées. Ces pattes de fixation sont sensiblement circulaires. Dans la face d'appui de l'une des pièces 3, chacune des pattes 61, 62 comporte un ergot 5. Les pattes de fixation 61, 62 de la deuxième pièce 2 et la structure comportent des trous 6 pour permettre l'insertion de l'ergot 5. Pour bloquer l'ergot dans les trous, un bouchon de blocage est apte à venir coopérer avec l'ergot pour verrouiller en position le support sur la structure.

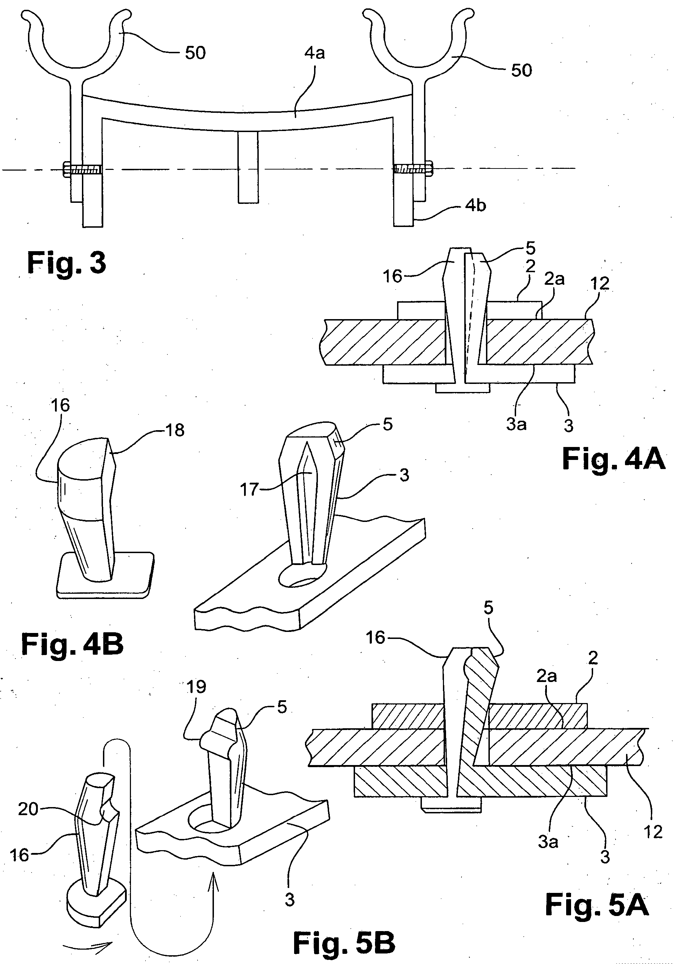

Les figures 4A, 4B, 5A et 5B illustrent deux formes de réalisation particulières de ce mécanisme de blocage.

Selon une première forme de réalisation (figures 4A et 4B), l'ergot 5 comporte une rainure 17 et le bouchon de blocage 16 une saillie 18, de forme correspondante, de sorte que cette saillie s'introduit dans la rainure pour assurer le blocage.

Selon la deuxième forme de réalisation proposée, l'ergot 5 comporte une saillie 19 et le bouchon de blocage 16 un creux 20 correspondant destiné à venir se bloquer sur ladite saillie 19. Pour ce faire, le bouchon 16 est introduit dans les trous 6 dans une position dans laquelle le creux 20 n'est pas en position butée contre la saillie 19, puis on effectue une rotation de 90° du bouchon 16 pour déplacer ledit bouchon 16 dans une position de blocage.

Le support 1 est alors maintenu serré contre la structure grâce aux saillies 7 et creux 8, les moyens de blocage 5, 16 permettent d'assurer la fixation même lorsque les effets de la vibration rendent le serrage des deux demi-berceaux 2, 3 moins efficace.

Les figures 2A et 2B montrent une forme alternative des moyens de serrage des deux demi-berceaux 2, 3 contre structure. Chacune desdits demi-berceaux 2, 3 comporte des trous 11 réalisés sur les bords périphériques. Après fixation du support 1 sur la structure au moyen des ergots 5 et des bouchons 16, on finit l'assemblage entre les deux demi-berceaux 2, 3 en faisant passer des moyens de serrage 10 à travers ces orifices. Ces moyens de serrage 10 tels qu'une frette permettent de serrer les deux demi-berceaux 2, 3 l'un contre l'autre. De préférence, ces moyens de serrage 10 sont constitués par exemple par un collier muni de positions marquées 10a qui coopèrent avec un élément de blocage 10b. Ainsi il est possible d'adapter le serrage en fonction de l'épaisseur de la structure. D'autres formes ou moyens équivalents au collier tel que représenté peuvent aussi être utilisés.

Le support comporte également une pièce de support 4 apte à maintenir et fixer le câble ou tout autre objet allongé transversalement aux surfaces latérales 12a, 12b de la structure.

Après fixation du support 1 sur la structure, les objets allongés tels que les câbles sont rendus solidaires dudit support 1 par l'intermédiaire de moyens de maintien 50 tels qu'un collier de serrage (Fig. 3).

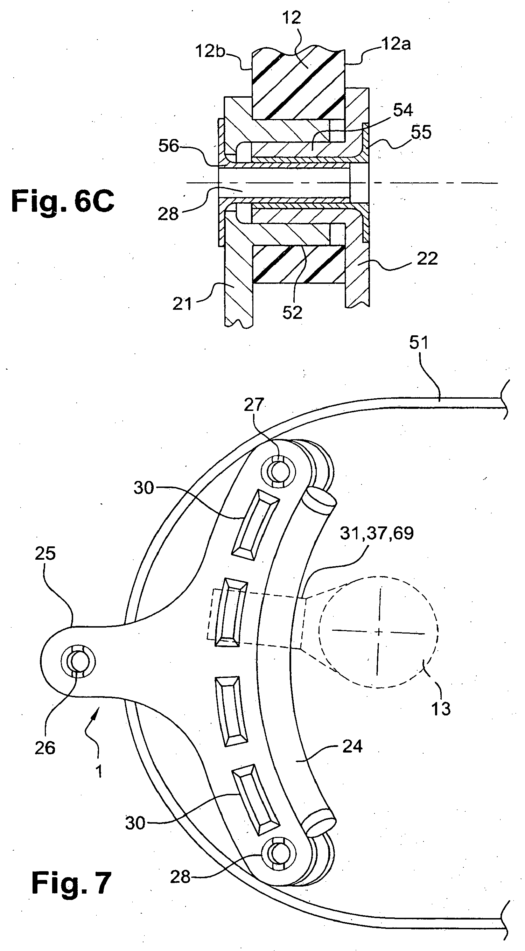

Les figures 6A, 6B et 7 illustrent un deuxième mode de réalisation de l'invention dans lequel le support pour maintenir en position des objets allongés tels que des câbles électriques sur une structure comporte :
- deux flasques ayant une forme identique 21, 22 qui présentent chacun une face d'appui 21 a, 22a pour venir en appui contre une surface d'appui correspondante de la structure 12 ;
- deux pièces de support 23, 24 solidaires aux flasques ;
- des moyens de maintien 31, 37, 69 aptes à maintenir des objets allongés à l'aide des moyens de fixation tels qu'une frette 36, un collier 44 ou un berceau 68.

Bien entendu, tout autre moyen de maintien, et notamment ceux décrits à l'aide des figures 1, 2A et 2B peuvent être utilisés.

Les deux flasques 21, 22 comportent chacun un bord sensiblement incurvé 21 b, 22b et une extension 25, 29. Pour fixer les flasques sur la structure, un trou 26 est prévu à cet effet sur les extensions et sur la structure pour faire passer un moyen de serrage conventionnel 10 tel que décrit sur la figure 2A. D'une manière générale, le trou 26 est ménagé sur la bissectrice des deux points d'appui (situés aux deux extrémités opposées des flasques 21, 22) et à distance proportionnelle à la géométrie de l'élément, de manière à ne pas générer de crique dans la structure.

Par ailleurs, comme cela est représenté sur la figure 6C, chacun des flasque 21, 22 est muni à chacune de ses extrémités d'une extension 52 (une seule visible sur les figures 6A et 6B) en saillie radiale depuis la surface d'appui correspondante 21 a, 22a. Les extensions sont par exemple de formes circulaires cylindriques complémentaire, de manière à ce que les extensions de l'un des deux flasques 21, 22 s'emboîtent dans les extensions 52 du deuxième flasque 21, 22.

Les extrémités des flasques comportent également un trou 27, 28 destinés à recevoir un moyen de serrage conventionnel pour maintenir les deux flasques assemblés.

En addition, il est également possible, comme représenté à la figure 6C, d'utiliser des moyens de fixation supplémentaires pour assurer le maintien des deux flasques 21, 22 l'un par rapport à l'autre et par rapport à la paroi sur laquelle ils sont fixés. Ainsi, on peut voir en coupe transversale un agrandissement des extensions 52, 54 des flasques 21, 22. Les deux extensions 52 et 54 ont une forme générale circulaire cylindrique creuse. L'extension 52 sur le flasque 21 présente un diamètre strictement supérieur au diamètre de l'extension 54 sur le flasque 22, de sorte que la seconde extension 54 est insérée dans l'orifice de la première extension 52. De plus, pour maintenir cet emboitement, on utilise deux inserts filetés 55 et 56 complémentaires. Plus précisément, un premier insert 55 est introduit dans l'orifice de la seconde extension 54, de plus petit diamètre, d'un premier côté 12a de la paroi 12 le long de laquelle le flasque 22 est accolé. Un second insert 56 est inséré dans l'orifice 28 de l'autre côté 12b de la paroi 12, ledit second insert 56 étant vissé dans le premier insert 55.

La figure 7 illustre un exemple de fixation des deux flasques 21, 22 sur le bord 51 d'une ouverture 15 pratiqué dans une structure. De la description qui vient d'être faite, on comprend aisément que par leur forme, les deux flasques peuvent être également fixés sur le bord d'une structure tel que le bord d'un cadre ou d'une traverse de plancher. Il n'est donc plus nécessaire de pratiquer une ouverture dans la structure pour faire passer le ou les objets allongés, n'entraînant donc pas une réduction des propriétés mécaniques de la structure. En outre, les cheminements des câbles ne sont plus imposés par les structures, l'installation des câbles est rendue plus flexible.

Les deux pièces 23, 24 se présentent sous la forme d'une rampe ayant une forme sensiblement cylindrique de section circulaire et incurvée pour épouser la forme des flasques. Ces rampes sont solidarisées aux flasques par tout moyen conventionnel, notamment par collage. Bien entendu, les rampes cylindriques peuvent avoir une autre section, et notamment une section carrée, ovale etc. Notamment, la section peut avantageusement présenter une face plane dirigée vers l'extérieur, sur laquelle, comme cela sera décrit par la suite, des modules peuvent être fixés/clippés et être immobilisés en rotation sur ladite rampe.

Dans un exemple de réalisation, comme illustré sur les figures 6A et 6B, une des deux rampes 23 est disposée latéralement par rapport au flasque et le deuxième 24 sur le bord incurvé 21 b du flasque. Dans une autre variante de réalisation, les deux rampes peuvent être solidarisées toutes les deux sur les bords incurvés 21 b, 22b.

L'objet allongé 13 est maintenu en position par rapport à la rampe par l'intermédiaire d'un module à clipper 31, 37, 69 (figure 7). Ce module à clipper comporte une première patte de fixation 32 configurée de manière à venir se clipper sur la rampe et une deuxième patte de fixation destinée à fixer l'objet allongé par l'intermédiaire des moyens de fixation connus.

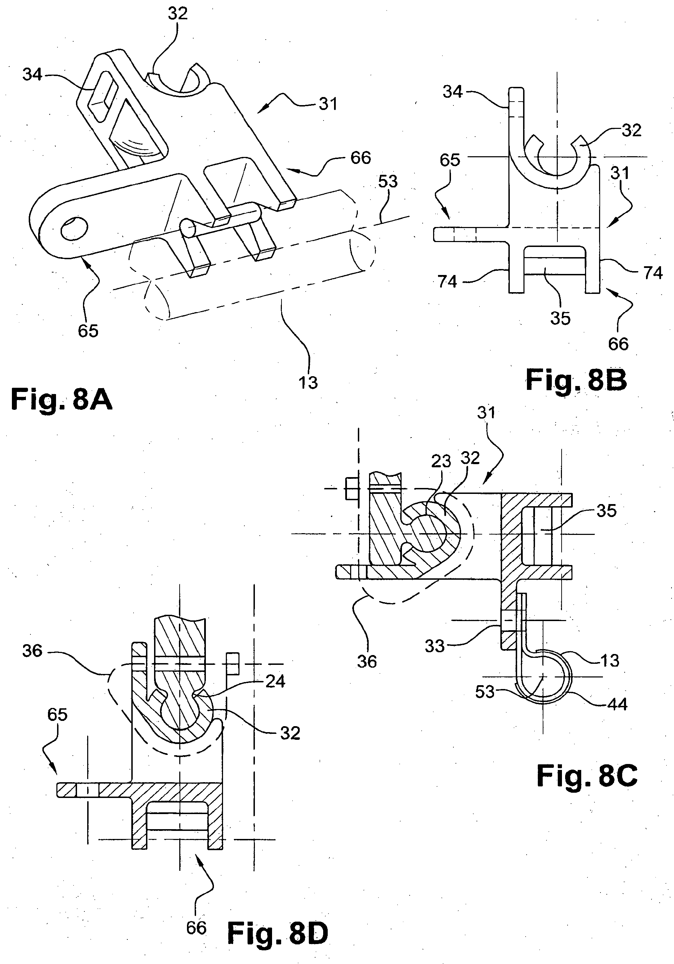

Les figures 8A, 8B, 8C et 8D montrent les différentes vues d'une première forme de réalisation d'un tel moyen de maintien 31 ou module à clipper. Ce module présente sous une forme de section sensiblement en L. Une extrémité de ce L comporte une surface ouverte concave 32, destinée à venir se clipper sur la rampe. En pressant ladite surface concave contre la paroi de la rampe, les bords de la surface concave 32 s'écartent légèrement, jusqu'à ce que la surface concave vienne en appui contre la paroi de la rampe, puis la surface concave se referme sur la rampe. Le module 31 est alors assemblé sur la rampe.

Il est prévu un trou 34 à proximité de cette surface concave ainsi que des trous 30 correspondants sur la paroi latérale des flasques pour permettre le passage d'une frette ou d'un autre moyen de fixation 36 à travers un orifice 30 sur le flasque 21, 22, qui permettent de consolider la fixation du module 31 sur la rampe 23, 34 correspondante.

La deuxième patte de fixation 65 du module à clipper tel qu'illustré sur la figure 8C se présente sous la forme d'une pièce de fixation ayant une forme sensiblement circulaire percée d'un trou 33. Un collier 44 est fixé à l'aide d'un boulon sur cette patte de fixation. Ce collier est destiné à recevoir l'objet allongé 13 et de le maintenir à l'intérieure du collier.

Ce module comporte également une deuxième patte de fixation 66 sous la forme d'une chape comportant un axe 35 reliant deux branches 74. Les deux branches 74 présentent une partie échancrée destinée à recevoir en appui une partie de l'objet allongé. Cette partie échancrée présente une forme sensiblement cylindrique creuse pour épouser la surface externe de l'objet à recevoir. Un collier de serrage vient attacher l'objet allongé sur l'axe 35. L'axe principal 53 de l'objet allongé 13 est alors sensiblement parallèle à l'axe 35. Ainsi, Ces deux pattes de fixation du module 31 permettent de fixer l'objet allongé suivant deux directions possibles en combinaison avec la position des rampes 23, 24 par rapport aux flasques 21, 22.

La figure 8C illustre un exemple particulier dans lequel le module 31 est fixé sur une rampe 23, la rampe étant elle-même fixée sur la surface latérale du flasque 22. L'objet allongé 13 est attaché sur le module en faisant passer un collier 44 par le trou 33, l'axe principal 53 de cet objet est donc orienté transversalement par rapport au plan des flasques.

La figure 8D illustre un autre exemple dans lequel le module 31 est fixé sur une rampe 24, la rampe étant fixée sur le bord incurvé 21 b du flasque 21. L'axe 53 de l'objet allongé est sensiblement parallèle au plan des flasques.

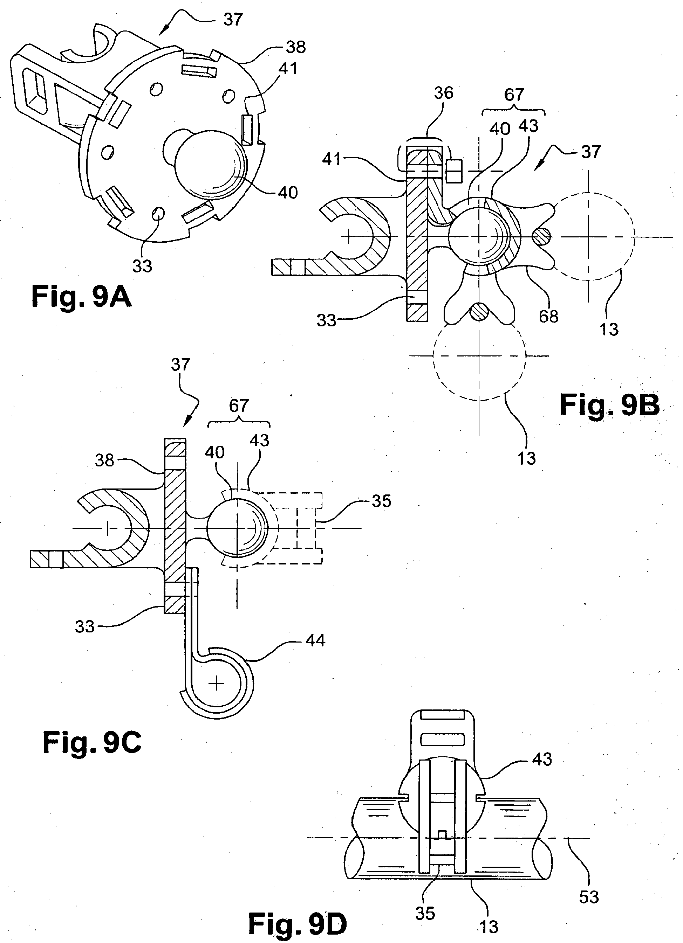

Les figures 9A, 9B, 9C et 9D montrent les différentes vues d'une autre forme de réalisation du moyen de maintien 37.

Cette forme diffère de la précédente en ce que la seconde patte de fixation forme une liaison rotule 67 pour orienter l'objet allongé dans la direction choisie. Pour ce faire, cette seconde patte de fixation comporte une pièce sensiblement circulaire 38 pourvue en son centre d'une saillie 40 ayant une surface sensiblement sphérique. Cette saillie 40 coopère avec une surface concave sphérique d'un élément mobile de fixation 43 de sorte à définir une liaison rotule pour orienter l'objet allongé dans la direction choisie.

Pour fixer l'élément 43 sur la pièce circulaire 38 une fois la direction suivant laquelle l'objet allongé doit être maintenu est choisie, des trous 41 sont prévus sur la périphérie de ladite pièce 38 et l'élément mobile pour faire passer un moyen de fixation 36. Ainsi, grâce cette liaison rotule, il est possible de régler l'orientation de l'élément de fixation 43 à 360° dans le plan de la pièce circulaire 38.

L'objet allongé 13 est fixé sur l'élément de fixation 43 par l'intermédiaire d'un berceau 68 ayant une partie épousant la forme externe de l'élément 43 et une autre partie échancrée épousant la forme externe de l'objet allongé à recevoir. Cette partie échancrée comporte un évidement ouvert à ses extrémités, lequel est destiné à recevoir une partie au moins d'un collier de serrage.

Par ailleurs, la pièce circulaire 38 comporte également des trous 33 pour fixer un collier de serrage 44 au moyen d'un boulon.

De manière générale, les moyens de fixation pour fixer l'objet allongé peuvent être similaires à ceux qui sont décrits dans la première forme de réalisation du module à clipper 31.

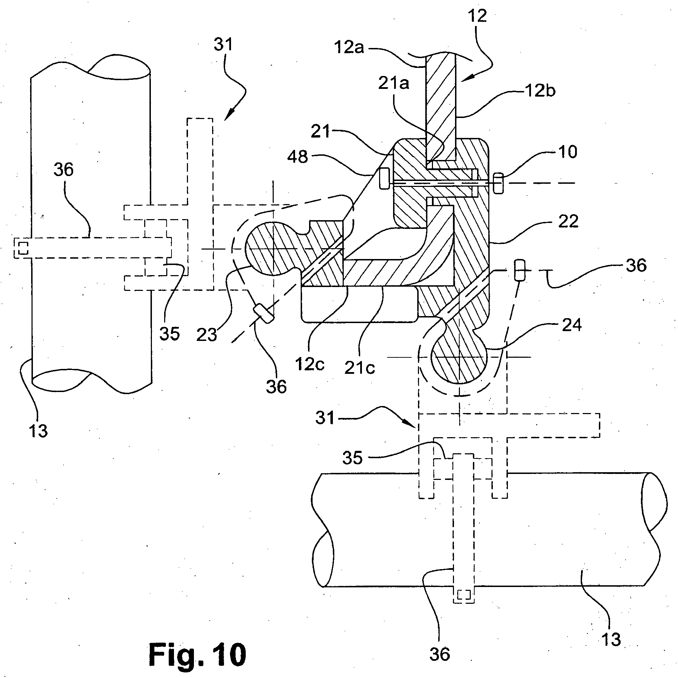

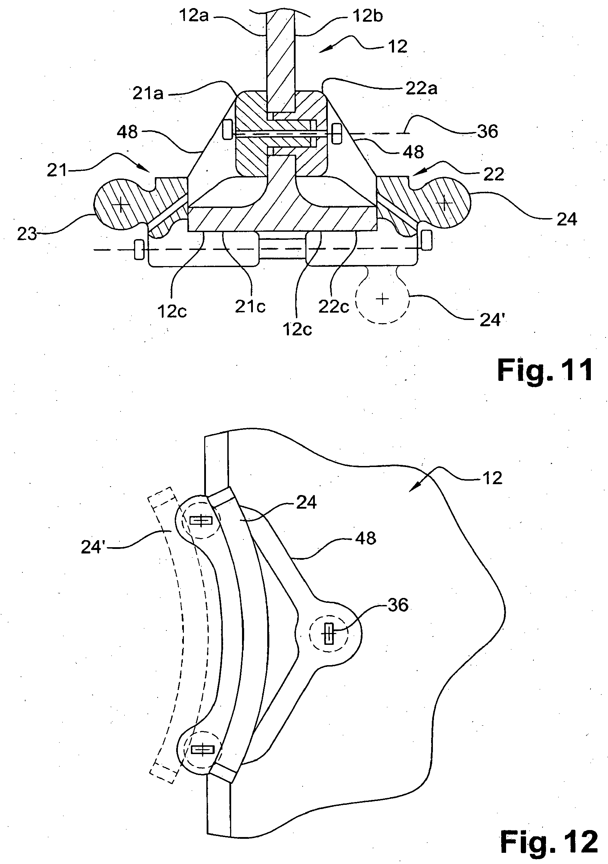

Les figures 10 et 11 représentent une variante de réalisation des flasques dans une configuration particulière de la structure 12 dans laquelle au moins une des surfaces d'appui de la structure 12 forme deux surfaces d'appui en équerre 12a, 12c.

La figure 10 montre une structure telle qu'un cadre ayant une forme de section en L. L'une des deux surfaces est formée de deux surfaces d'appui 12a, 12c en équerre. Le flasque 21 disposé du côté de cette surface d'appui comporte alors deux faces 21 a, 21 c reliées entre elles par un bras de liaison 48. Ce bras est configuré de sorte que les deux surfaces 21 a, 21 c viennent en appui respectivement contre les deux surfaces d'appui en équerre 12a, 12c. Plus précisément, la face d'appui 21 c comporte également une forme de section en L qui vient prendre appui contre la surface d'appui 12c et le bord latéral du cadre 12. Le deuxième flasque 22 a une forme similaire à celle décrite dans l'exemple illustré sur les figures 6A et 6B. Ainsi les deux flasques, une fois assemblés ensemble forment un angle. Les objets allongés 13 maintenus sur un tel support sont orthogonaux entre eux. Sur la figure 10, les objets allongés 13 sont maintenues sur le support par des moyens de maintien ou module à clipper 31 qui sont illustrés sur les figures 8A-8D.

Pour assurer l'assemblage, une extrémité des flasques comporte un trou destiné à recevoir un moyen de serrage 10 qui passe également dans un trou de la structure. Les autres extrémités sont assemblées ensemble également par un moyen de serrage similaire.

La figure 11 illustre un cadre ayant une forme de section en T. Chacune des surfaces d'appui 12a, 12b est formée de deux surfaces d'appui en équerre. Dans ce cas, les deux flasques 21, 22 pour former le support de fixation comportent chacun deux faces 21 a, 21 c reliées entre elles par un bras de liaison 48. Une fois assemblés ensembles, les deux flasques forment un angle de sorte que les surfaces d'appui 21 c, 22c viennent entourer la base du cadre en T.

Les rampes 23, 24 sont respectivement solidarisées sur la paroi latérale de ces flaques. Il est également possible qu'une des deux rampes 24' soit solidarisée au bord incurvé de l'un des deux flasques tel qu'illustré sur la figure 12.

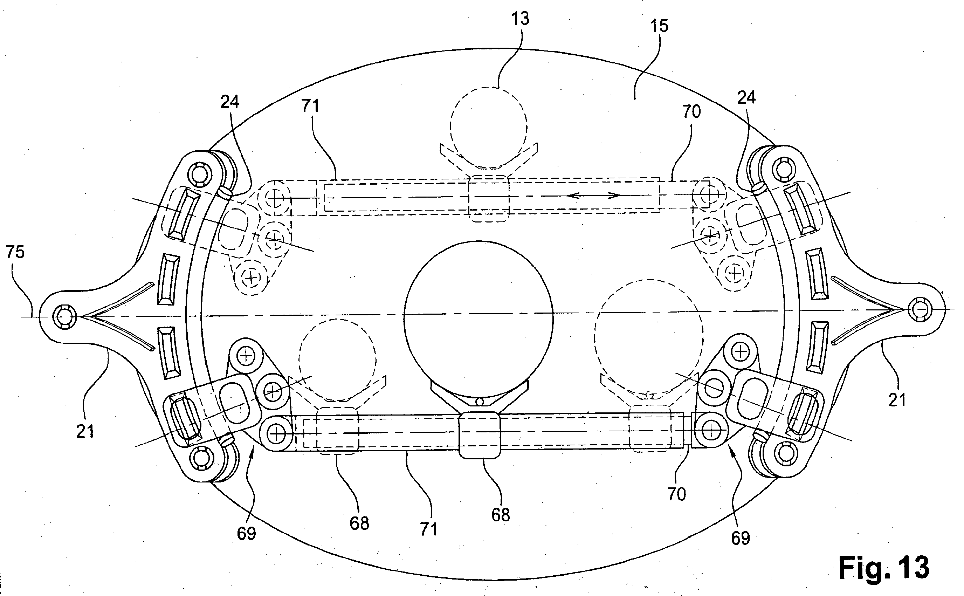

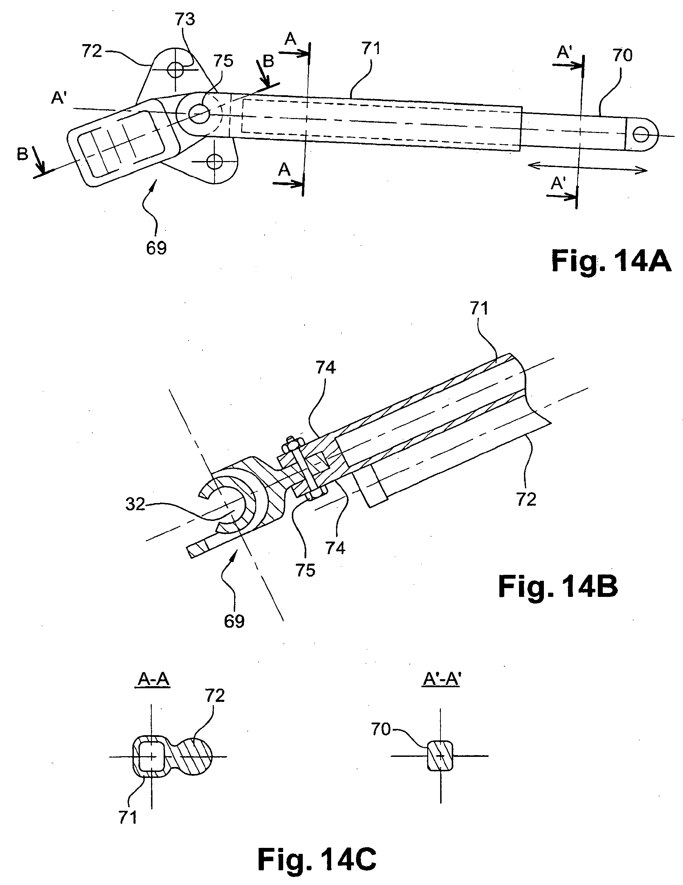

Les figures 13 et 14 illustrent une troisième forme particulièrement avantageuse du module à clipper 69 mis en oeuvre dans le support selon le deuxième mode de réalisation.

La figure 13 montre deux supports montés en vis-à-vis dans l'ouverture 15 de la structure 12. Un ensemble de deux pièces de support intermédiaires 70, 71 est disposé dans l'ouverture entre les deux supports, l'axe principal de cet ensemble étant orienté parallèlement à l'un des axes 75 de la structure. Les extrémités de ces deux pièces de support 70, 71 sont fixées sur les rampes 24 des deux supports en vis-à-vis par l'intermédiaire d'un module à clipper 69.

Les deux pièces 70, 71 sont montées de manière coulissante l'une par rapport l'autre pour ajuster la longueur de l'ensemble en fonction de la taille de l'ouverture. Par ailleurs, cet agencement télescopique peut permettre d'absorber les mouvements relatifs des structures le long desquelles lesdites pièces 70, 71 s'étendent, les unes par rapport aux autres. Une vue de section de ces deux pièces est montrée sur la figure 14C. Cet ensemble de pièces de support intermédiaires télescopiques 70, 71 permet avantageusement de maintenir en position plusieurs objets allongés 13 espacés entre eux d'une certaine distance au moyen d'un berceau 68. On peut ajuster très facilement cette distance en déplaçant simplement le berceau 68.

La figure 14A montre plus en détail un des deux modules à clipper 69 sur lequel est fixé une extrémité de l'ensemble de pièces de support intermédiaires 70; 71. Plus précisément, le module à clipper 69 comporte une première patte de fixation 32 apte à venir se clipper sur la rampe 24 du support comme dans les deux autres formes de réalisation des modules à clipper et une deuxième patte de fixation 72 sur laquelle est fixée une extrémité de l'ensemble 70, 71.

Une coupe du module 69 le long de l'axe B-B au niveau de la deuxième patte de fixation 72 est représente sur la figure 14B. Cette deuxième patte de fixation 72 est munie de trois trous de fixation 73. L'extrémité de la pièce intermédiaire 71 se présente sous la forme d'une chape comportant deux branches 74. Un moyen de fixation connu, tel qu'une fixation vis écrou ou goupille 75, relie la deuxième patte de fixation 72 aux branches 74. Des trous dans la deuxième patte de fixation et dans les branches permettent le passage de la goupille ou de la vis. L'autre extrémité de l'ensemble 70, 71 non illustrée sur la figure 14B, est fixée de manière similaire sur le module à clipper 69 du deuxième support.

La figure 14B montre également un exemple de pièce de support intermédiaire qui comporte une rampe femelle 72 solidaire d'une rampe mâle 71 qui est l'une des deux pièces de support intermédiaire. Les extrémités de la rampe mâle sont fixées à la deuxième patte de fixation du module à clipper 69 par les moyens de fixation décrits ci-dessus. La figure 14C représentant une vue de coupe selon l'axe AA de cette pièce de support intermédiaire 71 montre que la rampe femelle 72 se présente sous la forme d'un cylindre de section circulaire. Le berceau 68 destiné à fixer l'objet allongé sur la rampe comporte une partie apte à venir se clipper sur la rampe 72 et une autre partie pour recevoir en appui une partie de l'objet allongé. Un collier de serrage vient attacher l'ensemble.

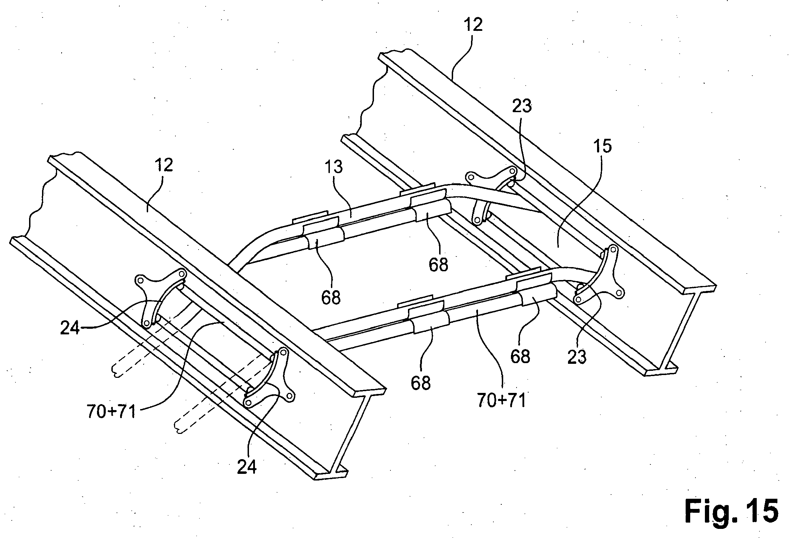

La figure 15 illustre les deux formes de montage des supports tels que décrits sur les figures 14A et 14B par rapport aux traverses 12. Selon une première forme de montage telle qu'illustrée également sur la figure 13, les supports peuvent être montés en vis-à-vis dans l'ouverture 15 d'une traverse 12 pour maintenir en position le passage d'un câble électrique 13 par exemple à travers l'ouverture (Figure 13). Dans ce cas, les modules à clipper 69 sont montés sur les rampes 24 qui sont disposées sur le bord incurvé des deux flasques de sorte que les modules à clipper sont positionnés en vis-à-vis pour recevoir les extrémités de l'ensemble des deux pièces de support intermédiaires 70, 71. Le coulissement de la pièce 70 dans la pièce 71 permet d'adapter la longueur de l'ensemble 70 + 71 à la taille de l'ouverture 15.

La figure 15 montre également une seconde forme de montage, les modules à clipper 69 sont montés sur des rampes 23 qui sont disposées latéralement par rapport au flasque de sorte que les deux modules à clipper 69 sont disposés en vis-à-vis entre deux traverses 12. L'ensemble 70+71 est fixé sur ces deux modules 69 entre les deux traverses 12. Cette deuxième forme de montage dit montage longitudinal permet de maintenir en position le passage d'un câble électrique 13 d'une traverse à l'autre au moyen des berceaux 68 clippés sur les rampes femelles 72. Dans cette deuxième forme, le coulissement de la pièce 70 dans la pièce 71 permet d'ajuster en longueur en fonction de la distance entre les deux traverses 12, et d'absorber les mouvements relatifs desdites traverses 12.

## Revendications

1. Support (1) pour le maintien en position d'un objet allongé (13) tel qu'un câble électrique par rapport à une structure (12), ledit support comportant :
- deux pièces de liaison du support avec la structure (2, 3, 21, 22) qui présentent chacune une face d'appui (2a, 3a, 21a, 22a) pour venir en appui de chaque côté de la structure contre une surface d'appui (12a, 12b) de la structure, lesdites deux pièces de liaison étant assemblées l'une à l'autre par des moyens de serrage (7, 8, 10), les deux pièces de liaison se présentant sous la forme d'une paire de flasques (21, 22), lesdits flasques comportant un bord ayant une forme sensiblement incurvée (21 b, 22b) et un bord prolongé par une extension (25, 29)
- au moins une pièce de support (4, 23, 24) apte à maintenir ledit objet allongé (13) par l'intermédiaire de moyens de maintien (50, 31, 37, 69),
**caractérisé en ce que** ladite pièce de support se présente sous la forme d'une rampe (23, 24) ayant une forme sensiblement cylindrique et solidaire d'une pièce de liaison et les moyens de maintien se présentent sous la forme d'un module à clipper (31, 37, 69) apte à maintenir l'objet allongé (13) par rapport à la rampe (23, 24).

2. Support selon la revendication 1, **caractérisé en ce que** lesdites surfaces d'appui (12a, 12b) de la structure sont sensiblement planes, au moins une ouverture (15) étant aménagée dans la structure (12) pour faire passer ledit objet allongé (13).

3. Support selon la revendication 2, **caractérisé en ce que** lesdites deux pièces de liaison (2, 3, 21, 22) sont configurées de sorte à venir serrer au moins partiellement le pourtour de l'ouverture (15).

4. Support selon l'une des revendications 1 à 3, **caractérisé en ce que** l'une des deux pièces de liaison comprend au moins une saillie (7) et l'autre pièce comprend au moins un creux (8) correspondant, lesdites saillies et lesdits creux correspondants coopérant ensemble pour bloquer lesdites deux pièces contre les surfaces d'appui de la structure (12).

5. Support selon l'une des revendications 1 à 3, **caractérisé en ce que** les deux pièces de liaison comprennent des trous (11) permettant le passage des moyens de serrage (10) pour bloquer lesdites deux pièces contre les surfaces d'appui de la structure (12).

6. Support selon l'une des revendications 1 à 5, **caractérisé en ce que** le module à clipper (31, 37, 69) comporte une première patte de fixation (32) configurée de manière à venir se clipper sur ladite rampe (23, 24) et au moins une seconde patte de fixation (65, 66, 67, 72) destinée à fixer l'objet allongé (13) par l'intermédiaire de moyens de fixation (36, 44, 68).

7. Support selon la revendication 6, **caractérisé en ce que** ladite seconde patte de fixation (67) forme une liaison rotule (40, 43) pour orienter l'objet allongé (13) dans la direction choisie.

8. Support selon la revendication 7, **caractérisé en ce que** ladite seconde patte de fixation forme une pièce de fixation (72) comprenant au moins un trou (73).

9. Support selon la revendication 8, **caractérisé en ce qu'**il comporte un ensemble de deux pièces de support intermédiaires (70, 71) destiné à être interposé entre deux pièces de fixation (72) appartenant à deux supports distincts, les deux pièces (70, 71) étant montées coulissantes l'une par rapport à l'autre pour ajuster la longueur dudit ensemble.

10. Support selon la revendication 9, **caractérisé en ce que** ladite pièce de support intermédiaire (70) comporte une rampe femelle (72) ayant une forme sensiblement cylindrique de section circulaire, l'objet allongé (13) étant maintenu en position par rapport à ladite rampe par des moyens de fixations (68).

11. Support selon l'une des revendications 1 à 10, **caractérisé en ce qu'**au moins une desdites surfaces d'appui (12a, 12b) de la structure formant deux surfaces d'appui en équerre (12a, 12c), le flasque destiné à venir en appui contre lesdites surfaces d'appui en équerre (12a, 12c) comporte deux faces d'appui (21a, 21c) reliant entre elles par un bras de liaison (48), ledit bras étant agencé de sorte que lesdites deux faces d'appui (21a, 21c) sont en appui respectivement contre les deux surface d'appui en équerre (12a, 12c).

## Patentansprüche

1. Träger (1) zum in Stellung halten eines länglichen Gegenstands (13) wie eines Stromkabels bezüglich einer Struktur (12), wobei der Träger aufweist:
- zwei Verbindungsbauteile des Trägers mit der Struktur (2, 3, 2 1 , 22), die je eine Auflageseite (2a, 3a, 21a, 22a) haben, um auf jeder Seite der Struktur gegen eine Auflagefläche (12a, 12b) der Struktur in Auflage zu kommen, wobei die zwei Verbindungsbauteile durch Klemmeinrichtungen (7, 8, 10) zusammengebaut werden, wobei die zwei Verbindungsbauteile in Form eines Paars von Flanschen (21, 22) vorliegen, wobei die Flansche einen Rand mit einer im Wesentlichen gekrümmten Form (21b, 22b) und einen durch eine Erweiterung verlängerten Rand (25, 29) haben,
- mindestens ein Trägerbauteil (4, 23, 24), das den länglichen Gegenstand (13) mittels Halteeinrichtungen (50, 31, 37, 69) halten kann,
**dadurch gekennzeichnet, dass** das Trägerbauteil in Form einer Rampe (23, 24) vorliegt, die eine im Wesentlichen zylindrische Form hat und fest mit einem Verbindungsbauteil verbunden ist, und die Halteeinrichtungen die Form eines einklinkbaren Moduls (31, 37, 69) haben, das den länglichen Gegenstand (13) bezüglich der Rampe (23, 24) halten kann.

2. Träger nach Anspruch 1, **dadurch gekennzeichnet, dass** die Auflageflächen (12a, 12b) der Struktur im Wesentlichen eben sind, wobei mindestens eine Öffnung (15) in der Struktur (12) ausgespart ist, um den länglichen Gegenstand (13) durchzulassen.

3. Träger nach Anspruch 2, **dadurch gekennzeichnet, dass** die zwei Verbindungsbauteile (2, 3, 21, 22) so konfiguriert sind, dass sie den Umriss der Öffnung (15) zumindest teilweise einklemmen.

4. Träger nach einem der Ansprüche 1 bis 3, **dadurch gekennzeichnet, dass** eines der zwei Verbindungsbauteile mindestens einen Vorsprung (7) und das andere Bauteil mindestens eine entsprechende Vertiefung (8) enthält, wobei die Vorsprünge und die entsprechenden Vertiefungen zusammenwirken, um die zwei Bauteile gegen die Auflageflächen der Struktur (12) zu blockieren.

5. Träger nach einem der Ansprüche 1 bis 3, **dadurch gekennzeichnet, dass** die zwei Verbindungsbauteile Löcher (11) enthalten, die den Durchgang der Klemmeinrichtungen (10) erlauben, um die zwei Bauteile gegen die Auflageflächen der Struktur (12) zu blockieren.

6. Träger nach einem der Ansprüche 1 bis 5, **dadurch gekennzeichnet, dass** das einklinkbare Modul (31, 37, 69) eine erste Befestigungslasche (32), die so konfiguriert ist, dass sie sich auf die Rampe (23, 24) einklinkt, und mindestens eine zweite Befestigungslasche (65, 66, 67, 72) aufweist, die dazu bestimmt ist, den länglichen Gegenstand (13) mittels Befestigungseinrichtungen (36, 44, 68) zu befestigen.

7. Träger nach Anspruch 6, **dadurch gekennzeichnet, dass** die zweite Befestigungslasche (67) eine Kugelgelenkverbindung (40, 43) bildet, um den länglichen Gegenstand (13) in der gewählten Richtung auszurichten.

8. Träger nach Anspruch 7, **dadurch gekennzeichnet, dass** die zweite Befestigungslasche ein Befestigungsbauteil (72) formt, das mindestens ein Loch (73) enthält.

9. Träger nach Anspruch 8, **dadurch gekennzeichnet, dass** er eine Einheit von zwei Zwischenträgerbauteilen (70, 71) aufweist, die dazu bestimmt ist, zwischen zwei Befestigungsbauteile (72) eingefügt zu werden, die zu zwei verschiedenen Trägern gehören, wobei die zwei Bauteile (70, 71) zueinander gleitend montiert sind, um die Länge der Einheit einzustellen.

10. Träger nach Anspruch 9, **dadurch gekennzeichnet, dass** das Zwischenträgerbauteil (70) eine Aufnahmerampe (72) enthält, die eine im Wesentlichen zylindrische Form mit kreisförmigem Querschnitt hat, wobei der längliche Gegenstand (13) bezüglich der Rampe durch Befestigungseinrichtungen (68) in Stellung gehalten wird.

11. Träger nach einem der Ansprüche 1 bis 10, **dadurch gekennzeichnet, dass**, da mindestens eine der Auflageflächen (12a, 12b) der Struktur zwei winkelförmige Auflageflächen (12a, 12c) formt, der Flansch, der dazu bestimmt ist, gegen die winkelförmigen Auflageflächen (12a, 12c) in Auflage zu kommen, zwei Auflageseiten (21a, 21c) aufweist, die miteinander durch einen Verbindungsarm (48) verbunden sind, wobei der Arm so gestaltet ist, dass die zwei Auflageseiten (21a, 21c) je gegen die zwei winkelförmigen Auflageflächen (12a, 12c) in Auflage sind.

## Claims

1. Mounting (1) for holding an elongate object (13), such as an electric cable, in position relative to a structure (12), said mounting comprising:
- two parts for connecting the mounting to the structure (2, 3, 21, 22), each having a bearing face (2a, 3a, 21a, 22a) for bearing on both sides of the structure against a bearing surface (12a, 12b) of the structure, said two connecting parts being fitted to one another by clamping means (7, 8, 10), the two connecting parts being in the form of a pair of flanges (21, 22), said flanges comprising one edge having an essentially inwardcurved shape (21b, 22b) and one edge extended by an extension (25, 29),
- at least one mounting part (4, 23, 24) able to hold said elongate object (13) by means of holding means (50, 31, 37, 69),
**characterized in that** said mounting part is in the form of an essentially cylindrical ramp (23, 24) secured to a connecting part and the holding means are in the form of a clipper module (31, 37, 69) able to hold the elongate object (13) relative to the ramp (23, 24).

2. Mounting according to Claim 1, **characterized in that** said bearing surfaces (12a, 12b) of the structure are essentially planar, at least one opening (15) being created in the structure (12) in order for said elongate object (13) to be passed through.

3. Mounting according to Claim 2, **characterized in that** said two connecting parts (2, 3, 21, 22) are configured so as to at least partially clamp the perimeter of the opening (15).

4. Mounting according to one of Claims 1 to 3, **characterized in that** one of the two connecting parts comprises at least one projection (7) and the other part comprises at least one corresponding indentation (8), wherein said projections and said corresponding indentations engage with one another in order to lock said two parts against the bearing surfaces of the structure (12).

5. Mounting according to one of Claims 1 to 3, **characterized in that** the two connecting parts comprise holes (11) for inserting the clamping means (10) in order to lock said two parts against the bearing surfaces of the structure (12).

6. Mounting according to one of Claims 1 to 5, **characterized in that** the clipper module (31, 37, 69) comprises a first attachment tab (32) configured so as to clip onto said ramp (23, 24) and at least one second attachment tab (65, 66, 67, 72) designed to secure the elongate object (13) by means of attachment means (36, 44, 68).

7. Mounting according to Claim 6, **characterized in that** said second attachment tab (67) forms a ball joint (40, 43) in order to orient the elongate object (13) in the chosen direction.

8. Mounting according to Claim 7, **characterized in that** said second attachment tab forms an attachment part (72) comprising at least one hole (73).

9. Mounting according to Claim 8, **characterized in that** it comprises a set of two intermediate mounting parts (70, 71) which is designed to be interposed between two attachment parts (72) belonging to two different mountings, the two parts (70, 71) being mounted so as to slide relative to one another in order to adjust the length of said set.

10. Mounting according to Claim 9, **characterized in that** said intermediate mounting part (70) comprises an essentially cylindrical female ramp (72) of circular cross section, the elongate object (13) being held in position relative to said ramp by attachment means (68).

11. Mounting according to one of Claims 1 to 10, **characterized in that**, at least one of said bearing surfaces (12a, 12b) of the structure forming two bearing surfaces at right angles (12a, 12c), the flange designed to bear against said bearing surfaces at right angles (12a, 12c) comprises two bearing faces (21a, 21c) connected to one another by a connecting arm (48), said arm being arranged such that said two bearing faces (21a, 21c) bear respectively against the two bearing surfaces at right angles (12a, 12c).
